# EUROPÄISCHE PATENTSCHRIFT

(11) **EP 1 022 467 B1**
(45) Veröffentlichungstag und Bekanntmachung des Hinweises auf die Patenterteilung: **13.07.2005**
(21) Anmeldenummer: 99121336.4
(22) Anmeldetag: 26.10.1999
(51) Int. Cl.: F04B 53/16, F04B 53/20

(54) **Kolbenpumpe**
Piston pump
Pompe à piston

(30) Priorität: 20.01.1999 DE 19902018
(43) Veröffentlichungstag der Anmeldung: 26.07.2000
(73) Patentinhaber: ROBERT BOSCH GMBH, 70442 Stuttgart (DE)
(72) Erfinder: Schuller, Wolfgang, 74343 Sachsenheim (DE); Eckstein, Ursula, 71701 Schwieberdingen (DE)

(56) Entgegenhaltungen:
- EP-A- 0 631 050
- DE-A- 4 316 986
- US-A- 5 688 113
- US-A- 5 823 639

## Beschreibung

### Stand der Technik

Die Erfindung betrifft eine Kolbenpumpe nach der Gattung des Hauptanspruchs.

Die Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

Es ist eine Vielzahl derartiger Kolbenpumpen bekannt. Beispielhaft genannt seien die aus der DE 41 07 979 A1 und aus der DE 44 07 978 A1 bekannten Kolbenpumpen. Die bekannten Kolbenpumpen weisen einen stabförmigen Kolben auf, der in einer Laufbuchse axial verschieblich geführt ist. Zum Antrieb des Kolbens zu einer hin- und hergehenden Hubbewegung dient ein elektromotorisch rotierend antreibbarer Exzenter, der den Kolben an einer aus der Laufbuchse vorstehenden Stirnseite beaufschlagt. Die Laufbuchse ist in eine Zylinderbohrung eines Pumpengehäuses eingesetzt.

Zum Zusammenbau der bekannten Kolbenpumpen werden deren Kolben in die Laufbuchse eingeführt und durch Anbringen einer Verliersicherung in der Laufbuchse gehalten. Als Verliersicherung wird bei der erstgenannten Druckschrift ein Niet in eine Radialbohrung der Laufbuchse eingesetzt, wobei der Niet nach innen übersteht und in eine umlaufende Nut im Kolben, die um mindestens einen Kolbenhub breiter als ein Durchmesser des Nietes ist, hineinragt und auf diese Weise den Kolben in der Laufbuchse sichert. Bei der zweitgenannten Druckschrift wird eine Hülse in ein Ende der Laufbuchse eingepreßt. Der Kolben dieser Kolbenpumpe verjüngt sich an einer Ringstufe, an der die in die Laufbuchse eingepreßte Hülse den Kolben in der Laufbuchse hält. Danach wird die Laufbuchse in die Zylinderbohrung des Pumpengehäuses eingeschraubt oder eingepreßt und verstemmt. Durch die Verliersicherung des Kolbens in der Laufbuchse wird der Zusammenbau der Kolbenpumpe vereinfacht, insbesondere bei Kolbenpumpen, die eine Kolbenrückstellfeder aufweisen, welche den Kolben aus der Laufbuchse heraus drückt.

### Vorteile der Erfindung

Die erfindungsgemäße Kolbenpumpe mit den Merkmalen des Anspruchs 1 hat den Vorteil, daß die Verliersicherung selbsttätig am Kolben quasi einrastet und die Hinterschneidung von selbst hintergreift, wodurch der Kolben zwar tiefer in die Laufbuchse hineingedrückt jedoch nicht weiter aus der Laufbuchse herausgezogen werden kann, als bis die Hinterschneidung an der Verliersicherung anstößt. Dies vereinfacht das verliersichere Einführen des Kolbens in die Laufbuchse gegenüber den bekannten Kolbenpumpen. Mit Hilfe der leicht anbringbaren Verliersicherung erhält man eine die Laufbuchse und den Kolben umfassende Vormontagebaugruppe. Die Vormontagebaugruppe ist robust und gut handhabbar, ihre sämtlichen Teile sind verliersicher aneinandergehalten. Sie läßt sich einfach beispielsweise durch Einpressen in eine Zylinderbohrung des Pumpengehäuses einsetzen.

Weiterer Vorteil der erfindungsgemäßen Kolbenpumpe ist, daß sie ein platzsparend angeordnetes Filter aufweist, wobei das Filter zugleich die Verliersicherung aufweist. Es entfällt der Montageschritt der Anbringung der Verliersicherung an der Laufbuchse, die durch die Anbringung des Filters erfolgt. Das Filter ist Bestandteil der Vormontagebaugruppe. Durch klemmende Anbringung des Filters an der Laufbuchse ist die Anbringung schnell und einfach durch Aufsetzen des Filters auf die Laufbuchse möglich. Zur Anbringung des Filters wird die Laufbuchse nicht beispielsweise durch Bördeln umgeformt, so daß keine Gefahr einer Span- oder Partikelbildung besteht, die den Kolben und die Laufbuchse beim Betrieb der Kolbenpumpe beschädigen könnte. Die klemmende Verbindung ergibt einen in einer Serienfertigung reproduzierbaren, stets gleichbleibend festen Sitz des Filters an der Laufbuchse mit enger Toleranz, ein zu loser oder zu fester Sitz des Filters wird vermieden.

Zusätzlicher Vorteil der erfindungsgemäßen Kolbenpumpe ist, daß kein Stufenkolben wie beispielsweise bei der aus der bereits genannten DE 44 07 979 A1 bekannten Kolbenpumpe für die Verliersicherung erforderlich ist, der Kolben kann an zwei axial voneinander beabstandeten Stellen mit demselben Führungsdurchmesser geführt sein.

Die Hinterschneidung am Kolben der erfindungsgemäßen Kolbenpumpe muß nicht umlaufend ausgebildet sein. Sie kann beispielsweise auch durch eine oder mehrere über den Umfang verteilte Ausnehmungen im Umfang des Kolbens gebildet sein.

Die Unteransprüche haben vorteilhafte Ausgestaltungen und Weiterbildungen der im Hauptanspruch angegebenen Erfindung zum Gegenstand.

Bei einer Weiterbildung gemäß Anspruch 7 dient das Filter als Führung für den Kolben in der Laufbuchse, die den Kolben vor dem Einsetzen der Vormontagebaugruppe in das Pumpengehäuse axial zur Laufbuchse ausgerichtet hält. Dadurch wird das Einbauen der Teile, die in das Pumpengehäuse eingebaut werden müssen, auf vorteilhafte Weise wesentlich erleichtert.

### Zeichnung

Die Erfindung wird nachfolgend anhand eines bevorzugt ausgewählten, in der Zeichnung dargestellten Ausführungsbeispiels näher erläutert. Es zeigen
- Figur 1: eine erfindungsgemäße Kolbenpumpe in einem abgewinkelten Achsschnitt;
- Figur 2: ein Filter mit Verliersicherung der Kolbenpumpe aus Figur 1 in größerem Maßstab in einem abgewinkelten Achsschnitt entlang Linie II-II in Figur 3; und
- Figur 3: eine Stirnansicht des Filters aus Figur 2 gemäß Pfeil III in Figur 2.

### Beschreibung des Ausführungsbeispiels

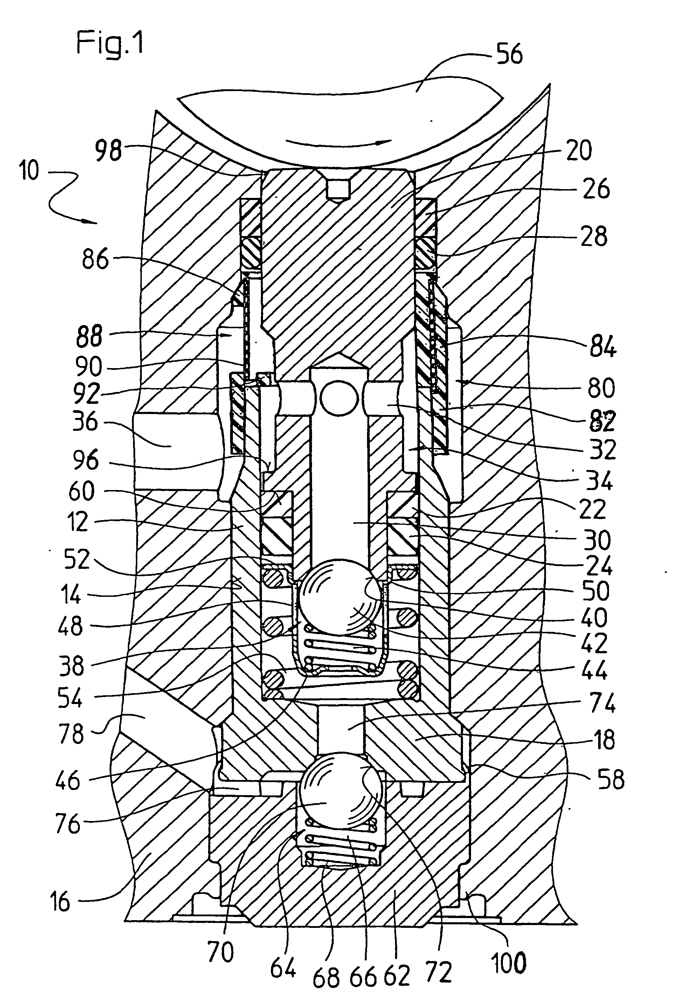

Die in Figur 1 dargestellte insgesamt mit 10 bezeichnete erfindungsgemäße Kolbenpumpe weist eine Laufbuchse 12 auf, die in eine gestufte Zylinderbohrung 14 eines Hydraulikblocks eingesetzt ist, der ein Pumpengehäuse 16 bildet. Der Hydraulikblock, von dem in der Zeichnung lediglich ein die Kolbenpumpe 10 umgebendes Bruchstück dargestellt ist, ist Teil einer schlupfgeregelten, im übrigen nicht dargestellten, hydraulischen Fahrzeugbremsanlage. In ihm sind außer der Kolbenpumpe 10 weitere hydraulische Bauelemente wie Magnetventile und Hydrospeicher eingesetzt und ein Hauptbremszylinder sowie Radbremszylinder angeschlossen. Mittels des Hydraulikblocks sind die hydraulischen Bauelemente hydraulisch miteinander verschaltet.

Die Laufbuchse 12 weist einen mit ihr einstückigen Laufbuchsenboden 18 auf. In der Laufbuchse 12 ist ein bolzenförmiger Kolben 20 über etwa die Hälfte seiner Länge aufgenommen. Ein in der Laufbuchse 12 befindliches Ende des Kolbens 20 ist mit einem Führungsring 22 an der Innenoberfläche der Laufbuchse 12 axial verschieblich geführt und mit einem Dichtring 24 abgedichtet. Das andere, aus der Laufbuchse 12 vorstehende Ende des Kolbens 20 ist mittels eines Führungsrings 26 axial verschieblich unmittelbar in der Zylinderbohrung 14 des Pumpengehäuses 16 geführt und mit einem Dichtring 28 am Pumpengehäuse 16 abgedichtet.

Zum Fluideinlaß ist der Kolben 20 mit einer axialen Sackbohrung 30 von seinem in der Laufbuchse 12 befindlichen Ende her versehen, die nahe ihres Grundes von Querbohrungen 32 gekreuzt wird. Ein Nenndurchmesser des Kolbens 20 entspricht einem Innendurchmesser der Laufbuchse 12, wobei eine Spielpassung zwischen Kolben 20 und Laufbuchse 12 besteht, d. h. der Kolben 20 weist in Bezug auf die Laufbuchse 12 ein Untermaß auf, das die Axialverschiebbarkeit des Kolbens 20 gewährleistet. Sackbohrung 30 und Querbohrungen 32 kommunizieren durch eine breite Nut 34 im Umfang des Kolbens 20 und eine offene Stirnseite der Laufbuchse 12 mit einer Einlaßbohrung 36, die radial zur Kolbenpumpe 12 in die Zylinderbohrung 14 mündet.

Als Einlaßventil 38 weist die erfindungsgemäße Kolbenpumpe 10 ein federbelastetes Rückschlagventil auf, welches an dem in der Laufbuchse 12 befindlichen Ende des Kolbens 20 angebracht ist: Eine Mündung der Sackbohrung 30 ist als konischer Ventilsitz 40 ausgebildet, gegen den eine Ventilkugel 42 als Ventilschließkörper von einer Schraubendruckfeder als Ventilschließfeder 44 gedrückt wird. Die Ventilschließfeder 44 stützt sich gegen einen Boden eines topfförmigen Ventilkäfigs 46 ab, der als Tiefziehteil aus Blech hergestellt ist und Durchlässe 48 aufweist. An seiner offenen Seite weist der Ventilkäfig 46 eine umlaufende Ringstufe 50, mit der er an der in der Laufbuchse 12 befindlichen Stirnseite des Kolbens 20 anliegt, und einen Radialflansch 52 auf, an dem er von einer Kolbenrückstellfeder 54 gegen die Stirnseite des Kolbens 20 gedrückt wird. Ventilkugel 42 und Ventilschließfeder 44 sind im Ventilkäfig 46 aufgenommen. Die Kolbenrückstellfeder 54 ist stärker ausgebildet als die Ventilschließfeder 44. Die Kolbenrückstellfeder 54 stützt sich gegen den Laufbuchsenboden 18 ab.

Zum Antrieb des Kolbens 20 zu einer in axialer Richtung hin- und hergehenden Hubbewegung weist die erfindungsgemäße Kolbenpumpe 10 einen elektromotorisch rotierend antreibbaren Exzenter 56 auf, gegen dessen Umfang der Kolben 20 von der Kolbenrückstellfeder 54 gedrückt wird.

Der in der Laufbuchse 12 befindliche Führungsring 22 und Dichtring 24 sind in axialer Richtung zwischen dem Radialflansch 52 des Ventilkäfigs 46 und einer Ringstufe 60 des Kolbens 20 auf dem Kolben 20 fixiert.

Auf den Laufbuchsenboden 18 ist ein zylindrisches Verschlußelement 62 aufgesetzt und mit einem Bördel 58 mit der Laufbuchse 12 verbunden. Das Verschlußelement 62 dient zum druckdichten Verschließen der Zylinderbohrung 14 und zum Fixieren der Laufbuchse 12 im Pumpengehäuse 16. Im Verschlußelement 62 ist ein Auslaßventil 64 in Form eines federbelasteten Rückschlagventils untergebracht: Das Verschlußelement 62 weist eine koaxiale Sackbohrung 66 auf, in die eine Schraubendruckfeder als Ventilschließfeder 68 und eine Ventilkugel 70 als Ventilschließkörper eingesetzt sind. Die Ventilkugel 70 wirkt zusammen mit einem konischen Ventilsitz 72, welcher an einer Mündung einer Mittelbohrung 74 angebracht ist, die den Laufbuchsenboden 18 axial durchsetzt. Der Ventilsitz 72 ist durch Prägen geformt und verfestigt. Ein Auslaß des Fluids erfolgt durch Radialkanäle 76 zwischen dem Laufbuchsenboden 18 und dem Verschlußelement 62 in eine radiale Auslaßbohrung 78 im Pumpengehäuse 16.

An einem offenen Ende der Laufbuchse 12 ist in Verlängerung der Laufbuchse 12 ein hohlzylindrisches Filter 80 angebracht. Zur Befestigung des Filters 80 an der Laufbuchse 12 ist deren Außendurchmesser im Bereich ihres offenen Endes verringert. Das Filter 80 weist einen hohlzylindrischen Kragen 82 auf, mit dem es nach Art einer Passung auf das offene, im Durchmesser verkleinerte Ende der Laufbuchse 12 aufgesetzt ist. In radialer Richtung betrachtet ist der das offene Ende der Laufbuchse 12 umschließende Kragen 82 des Filters 80 so auf die Laufbuchse 12 abgestimmt, daß nach dem Zusammenstecken des Filters 80 und der Laufbuchse 12 zwischen der Laufbuchse 12 und dem Kragen 82 eine Preßpassung entsteht, die einen klemmenden Halt des Filters 80 an der Laufbuchse 12 durch Kraftschluß bewirkt.

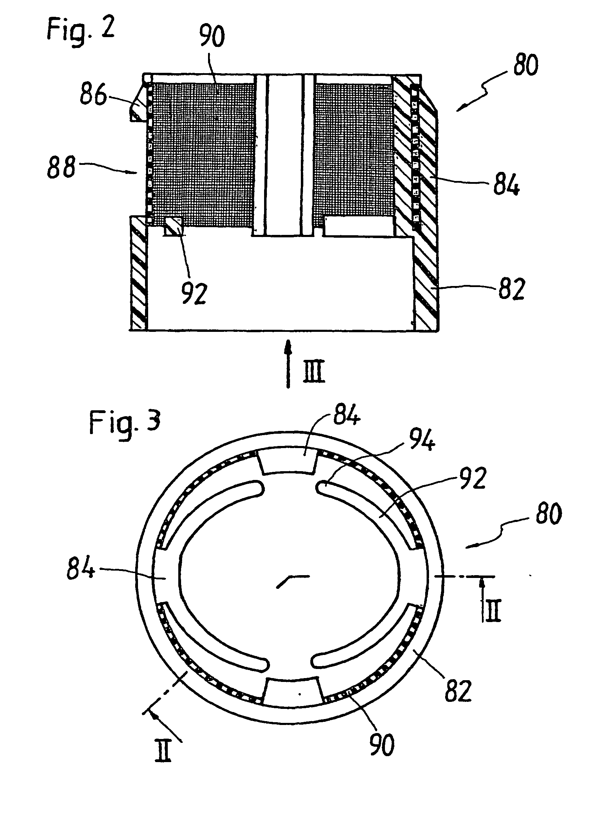

Das Filter 82 weist ein Filtergerüst auf, das außer dem Kragen 82 Filterstege 84 und einen Filterring 86 umfaßt (Figuren 2 und 3). Die Filterstege 84 stehen achsparallel vom Kragen 82 ab und tragen an ihren dem Filterkragen 82 fernen Enden den Filterring 86. Der Filterkragen 82, die Filterstege 84 und der Filterring 86 sind einstückig als Spritzgießteil aus Kunststoff hergestellt. Die Filterstege 84, der Filterkragen 82 und der Filterring 86 umrahmen Filterfenster 88, in die ein Filtergewebe 90 eingesetzt ist. Das Filtergewebe 90 ist schlauchförmig, es ist mit dem Filtergerüst 82, 84, 86 umspritzt.

Das Filter dient der Filterung des in die Kolbenpumpe 10 einströmenden Fluids. Des weiteren bildet das Filter 80 eine Führung, die den Kolben 20 koaxial in der Laufbuchse 12 ausrichtet, bis die Laufbuchse 12 in die Zylinderbohrung 14 des Pumpengehäuses 16 eingesetzt ist. Zur Führung des Kolbens 20 sind die Filterstege 84 an ihren Innenseiten bündig mit einer Innenseite der Laufbuchse 12, die Innenseiten der Filterstege 84 weisen eine einem Durchmesser der Innenseite der Laufbuchse 12 entsprechende Wölbung auf. Der Kolben 20 liegt dadurch jedenfalls bis zum Einsetzten der Laufbuchse 12 in die Zylinderbohrung 14 des Pumpengehäuses 16 mit seinem aus der Laufbuchse 12 vorstehenden Ende an den Innenseiten der Filterstege 84 an und wird dadurch axial ausgerichtet in der Laufbuchse 12 gehalten. Bei in das Pumpengehäuse 16 eingesetzter Laufbuchse 12 kann der Kolben 20 zwar auch von den Filterstegen 84 im Pumpengehäuse 16 geführt werden, vorzugsweise übernimmt der in das Pumpengehäuse 16 eingesetzte Führungsring 26 diese Aufgabe. Die die Kolbenführung bildenden Filterstege 84 des Filters 80 verhindern, daß sich der Kolben 20 in der Laufbuchse 12 schräg stellt und stellen sicher, daß der Kolben 20 beim Einsetzen der Laufbuchse 12 in die Zylinderbohrung 14 des Pumpengehäuses 16 nicht gegen den in das Pumpengehäuse 16 eingesetzten Dichtring 28 stößt, sondern in den Dichtring 28 und den Führungsring 26 hineingelangt. Der Filterkragen 82 liegt abdichtend an der Laufbuchse 12 und der Filterring 86 liegt abdichtend an der Zylinderbohrung 14 des Pumpengehäuses 16 an, so daß kein von der Kolbenpumpe 10 angesaugtes Fluid ungefiltert in die Laufbuchse 12 gelangen kann. In die Kolbenpumpe 10 einströmendes Fluid gelangt zwischen dem Filterkragen 82 und dem Filterring 86 durch das Filtergewebe 90 in den Filterfenstern 88 hindurch in die Nut 34 des Kolbens 20 und von dort weiter in die Querbohrungen 32 und die Sackbohrung 30.

Die Schnittdarstellung in Figur 1 ist entlang einer nicht dargestellten Längsachse der Kolbenpumpe 10 so abgewinkelt, daß der Schnitt in der rechten Bildhälfte durch einen Filtersteg 84 und in der linken Bildhälfte durch ein Filterfenster 88 hindurch geht. Die Abwinklung der Schnittdarstellung in Figur 1 entspricht der Abwinklung des in Figur 2 dargestellten Achsschnitts des Filters 80, dessen Schnittverlauf in Figur 3 mit Linie II-II angegeben ist

Das Filter 80 weist eine Verliersicherung für den Kolben 20 in der Laufbuchse 12 auf: Zwei einander gegenüber angeordnete Filterstege 84 weisen mit ihnen einstückige federnde Finger 92 auf. Die Finger 92 sind unmittelbar im Anschluß an das offene Ende der Laufbuchse 12 angeordnet. Die Finger 92 sind bogenförmig gekrümmt, wobei sie gegenüber einer Umfangsrichtung im Bogen nach innen verlaufen, so daß freie Enden 94 der Finger 92 in die Nut 34 des Kolbens 20 hineinragen.

Eine Nutflanke 96 der Nut 34 im Kolben 20 bildet eine Hinterschneidung, die mit den die Verliersicherung bildenden Fingern 92 zusammenwirkt: Bis zum Einsetzen der Laufbuchse 12 in die Zylinderbohrung 14 des Pumpengehäuses 16 drückt die Kolbenrückstellfeder 54 den Kolben 20 mit seiner die Hinterschneidung bildenden Nutflanke 96 in Anlage an die Finger 92, die die Nutflanke 96 hintergreifen. Auf diese Weise halten die Finger 92 den Kolben 20 gegen die Kraft der Rückstellfeder 54 in der Laufbuchse 12, der Kolben 20 läßt sich nicht aus der Laufbuchse 12 herausziehen.

Zum Zusammenbau der erfindungsgemäßen Kolbenpumpe 10 wird das die Verliersicherung aufweisende Filter 80 auf den Kolben 20 aufgeschoben, bis die Finger 92 in die Nut 34 des Kolbens 20 hinein federn. Dies bedeutet, die Finger 92 der Verliersicherung hintergreifen die Nutflanke 96 der Nut 34 des Kolbens 20. Zum Aufsetzen des Filters 82 ist der Kolben 20 an seiner dem Exzenter 56 zugewandten Stirnseite mit einer Fase 98 versehen, die die Finger 92 beim Aufschieben des die Verliersicherung aufweisenden Filters 80 auf den Kolben 20 auseinanderspreizt.

Der Kolben 20 mit dem aufgeschobenen Filter 82 wird zusammen mit dem auf den Kolben 20 aufgeschobenen Führungsring 22 und Dichtring 24, dem am Stirnende des Kolbens 20 angesetzten Einlaßventil 38 und der Kolbenrückstellfeder 54 in die Laufbuchse 12 eingeführt und das Filter 80 mit seinem Filterkragen 82 auf das offene Ende der Laufbuchse 12 aufgeschoben. Das Filter 80 hält klemmend durch Kraftschluß an der Laufbuchse 12 und sichert mit seinen Fingern 92 den Kolben 20 gegen die Kraft der Kolbenrückstellfeder 54 in der Laufbuchse 12. Es kann auch zunächst der Kolben 20 mit dem Einlaßventil 38 und der Kolbenrückstellfeder 54 in die Laufbuchse 12 eingeführt und anschließend das Filter 80 über den Kolben 20 auf die Laufbuchse 12 aufgesetzt werden.

Nach dem Anbringen des Verschlußelements 62 mit dem in das Verschlußelement 62 eingesetzten Auslaßventil 64 am Laufbuchsenboden 18 mittels des Bördels 58 wird die komplette Vormontagebaugruppe mit der Laufbuchse 12, dem verliersicher in sie eingesetzten Kolben 20 und dem Verschlußelement 62 in die Zylinderbohrung 14 des Pumpengehäuses 16 eingepreßt und durch eine Verstemmung 100 des Pumpengehäuses 16 am Verschlußelement 62 druckdicht im Pumpengehäuse 16 fixiert. Das Anbringen des Verschlußelements 62 an der Laufbuchse 12 kann vor oder nach dem Einsetzen des Kolbens 20 in die Laufbuchse 12 erfolgen.

Die Finger 92 des Filters 80 bilden einen der Laufbuchse 12 zugeordneten ersten axialen Anschlag. Die dem Filter 80 stirnseitig zugewandte Nutflanke 96 des Kolbens 20 bildet einen dem Kolben 20 zugeordneten zweiten axialen Anschlag. Bevor die den Kolben 20, die Laufbuchse 12 und das Filter 80 umfassende Vormontagebaugruppe in das Pumpengehäuse 16 eingesetzt ist, wirkt die Verliersicherung in der Weise, daß der Kolben 20 axial nur so weit aus der Laufbuchse 12 herausbewegt werden kann, bis der dem Kolben 20 zugeordnete Anschlag 96 an dem der Laufbuchse 12 zugeordneten Anschlag 92 zur Anlage kommt. Nach dem Einbau der Vormontagebaugruppe in das Pumpengehäuse 16 wird der Ausfahrhub des Kolbens 20 durch den Exzenter 56 begrenzt.

## Patentansprüche

1. Kolbenpumpe mit einem zu einer hin- und hergehenden Hubbewegung antreibbaren Kolben, der axial verschieblich auf mindestens einem Teil seiner Länge in einer Laufbuchse aufgenommen ist, die in ein Pumpengehäuse einsetzbar ist, wobei an der Laufbuchse eine Verliersicherung für den Kolben angebracht ist, die eine Hinterschneidung des Kolbens hintergreift und wobei die Hinterschneidung innerhalb eines Kolbenumfangs am Kolben angebracht ist, **dadurch gekennzeichnet, daß** die Kolbenpumpe (10) ein rohrförmiges Filter (80) aufweist, daß das Filter (80) die Laufbuchse (12) verlängernd an einem offenen Stirnende der Laufbuchse (12) angebracht ist, daß die Verliersicherung (92) in radialer Richtung federnd ausgebildet ist und selbsttätig in Eingriff mit der Hinterschneidung (96) des Kolbens (20) gelangt, daß die Verliersicherung (92) am Filter (80) angebracht ist, und daß das Filter (80) klemmend an der Laufbuchse (12) angebracht ist.

2. Kolbenpumpe nach Anspruch 1, **dadurch gekennzeichnete, daß** die Verliersicherung (92) einstückig mit dem Filter (80) ist.

3. Kolbenpumpe nach Anspruch 1, **dadurch gekennzeichnete, daß** das Filter (80) und die Laufbuchse (12) nach Art einer Passung miteinander verbunden sind, und daß das Filter (80) zur klemmenden Befestigung an der Laufbuchse (12) eine Presspassung in Bezug auf die Laufbuchse (12) aufweist.

4. Kolbenpumpe nach Anspruch 1, **dadurch gekennzeichnete, daß** der Kolben (20) auf einem Teil seiner Länge axial aus der Laufbuchse (12) vorsteht und sowohl innerhalb der Laufbuchse (12) als auch außerhalb der Laufbuchse (12) einen Nenndurchmesser aufweist, der einem Innendurchmesser der Laufbuchse (12) entspricht.

5. Kolbenpumpe nach Anspruch 1, **dadurch gekennzeichnet, daß** die Hinterschneidung (96) des Kolbens (20) durch eine Nutflanke (96) einer umlaufenden im Kolbenumfang angebrachten Nut (34) gebildet ist.

6. Kolbenpumpe nach Anspruch 1, **dadurch gekennzeichnet, daß** die Verliersicherung (92) einen bogenförmigen, in Bezug auf eine Umfangsrichtung nach innen verlaufenden, federnden Finger (92) an einer Innenseite der Laufbuchse (12) aufweist.

7. Kolbenpumpe nach Anspruch 1, **dadurch gekennzeichnet, daß** das Filter (80) eine Führung für den Kolben (20) bildet, die den Kolben (20) axial oder zumindest näherungsweise axial ausgerichtet in der Laufbuchse (12) hält.

## Claims

1. Piston pump, with a piston which can be driven in a to-and-fro stroke movement and which is received axially displaceably, on at least part of its length, in a liner which can be inserted into a pump casing, the liner having mounted on it, for the piston, an anti-loss device which engages behind an undercut of the piston, and the undercut being formed on the piston within a piston circumference, **characterized in that** the piston pump (10) has a tubular filter (80), **in that** the filter (80) is mounted on an open end face of the liner (12) so as to prolong the liner (12), **in that** the anti-loss device (92) is designed to be resilient in the radial direction and comes automatically into engagement with the undercut (96) of the piston (20), **in that** the anti-loss device (92) is mounted on the filter (80), and **in that** the filter (80) is mounted in a clamping manner on the liner (12).

2. Piston pump according to Claim 1, **characterized in that** the anti-loss device (92) is in one piece with the filter (80).

3. Piston pump according to Claim 1, **characterized in that** the filter (80) and the liner (12) are connected to one another in the manner of a fit, and **in that** the filter (80) has, for clamping fastening to the liner (12), a press fit with respect to the liner (12).

4. Piston pump according to Claim 1, **characterized in that** the piston (20) projects, on part of its length, axially out of the liner (12) and has, both inside the liner (12) and outside the liner (12), a nominal diameter which corresponds to an inside diameter of the liner (12).

5. Piston pump according to Claim 1, **characterized in that** the undercut (96) of the piston (20) is formed by a groove flank (96) of a peripheral groove (34) formed in the piston circumference.

6. Piston pump according to Claim 1, **characterized in that** the anti-loss device (92) has, on an inside of the liner (12), an arcuate resilient finger (92) running inwards with respect to a circumferential direction.

7. Piston pump according to Claim 1, **characterized in that** the filter (80) forms, for the piston (20), a guide which keeps the piston (20) oriented axially or at least approximately axially in the liner (12).

## Revendications

1. Pompe à piston comportant un piston entraîné suivant un mouvement de translation en va-et-vient, ce piston coulissant axialement étant logé au moins sur une partie de sa longueur dans une chemise placée dans le corps de pompe,
la chemise comportant une fixation de retenue du piston pénétrant dans une partie en contre-dépouille du piston et
la partie en contre-dépouille est à l'intérieur de la périphérie du piston,
**caractérisée en ce que**
la pompe à piston (10) comporte un filtre tubulaire (80),
le filtre (80) est monté à l'extrémité frontale ouverte de la chemise (12) en prolongeant la chemise (12),
la fixation de retenue (92) est élastique dans la direction radiale et arrive d'elle-même en prise avec la partie en contre-dépouille (96) du piston (20),
la fixation de retenue (92) est portée par le filtre (80) et
le filtre (80) est serré sur la chemise (12).

2. Pompe à piston selon la revendication 1,
**caractérisée en ce que**
la fixation de retenue (92) fait corps avec le filtre (80).

3. Pompe à piston selon la revendication 1,
**caractérisée en ce que**
le filtre (80) et la chemise (12) sont reliés l'un à l'autre de manière ajustée, et
le filtre (80) présente un ajustage pressé par rapport à la chemise (12) pour être fixé de manière serrée sur la chemise (12).

4. Pompe à piston selon la revendication 1,
**caractérisée en ce que**
le piston (20) dépasse axialement de la chemise (12) sur une partie de sa longueur et possède un diamètre nominal à la fois vis-à-vis de l'intérieur de la chemise (12) et vis-à-vis de l'extérieur de la chemise (12), ce diamètre nominal correspondant au diamètre intérieur de la chemise (12).

5. Pompe à piston selon la revendication 1,
**caractérisée en ce que**
la partie en contre-dépouille (96) du piston (20) est formée par un flanc de rainure (96) d'une rainure (34) prévue à la périphérie du piston.

6. Pompe à piston selon la revendication 1,
**caractérisée en ce que**
la retenue de fixation comporte un doigt (92), en forme d'arc, dirigé vers l'intérieur par rapport à la direction périphérique, ce doigt étant élastique et il est prévu sur le côté intérieur de la chemise (12).

7. Pompe à piston selon la revendication 1,
**caractérisée en ce que**
le filtre (80) forme un guide pour le piston (20) qui retient le piston (20) axialement ou du moins sensiblement axialement, de manière alignée dans la chemise (12).
